# EUROPÄISCHE PATENTSCHRIFT

(11) **EP 2 472 660 B1**
(45) Veröffentlichungstag und Bekanntmachung des Hinweises auf die Patenterteilung: **30.05.2018**
(21) Anmeldenummer: 11188406.0
(22) Anmeldetag: 09.11.2011
(51) Int. Cl.: H01M 8/04

(54) **Brennstoffzellensystem**
Fuel cell system
Système de cellules combustibles

(30) Priorität: 29.12.2010 DE 102010064347
(43) Veröffentlichungstag der Anmeldung: 04.07.2012
(73) Patentinhaber: Robert Bosch GmbH, 70442 Stuttgart (DE)
(72) Erfinder: Kemmer, Helerson, 71665 Vaihingen (DE)

(56) Entgegenhaltungen:
- WO-A1-2008/000001
- DE-A1-102009 014 743
- US-A1- 2003 190 513
- US-A1- 2009 098 425

## Beschreibung

Die Erfindung betrifft ein Brennstoffzellensystem, insbesondere für ein Kraftfahrzeug, mit mindestens einer Brennstoffzelle, mit einem Kühlsystem zum Kühlen der Brennstoffzelle, wobei in dem Kühlsystem ein Kühlmittel zirkulierbar ist, mit einem Eintrittsstrom, durch den ein Edukt der Brennstoffzelle zuführbar ist, und mit einem Austrittsstrom, durch den ein Produkt aus der Brennstoffzelle abführbar ist, gemäß dem Oberbegriff des Anspruches 1. Weiterhin betrifft die Erfindung ein Verfahren gemäß dem unabhängigen Anspruch 8.

### Stand der Technik

Brennstoffzellensysteme mit Niedrigtemperaturbrennstoffzellen, wie z. B. Polymer-Elektrolytmembran-Brennstoffzellen, benötigen einen sehr leistungsstarken Kühler, da die Betriebstemperatur von beispielsweise 60-80°C für eine Polymer-Elektrolytmembran-Brennstoffzelle nur wenig über der Umgebungstemperatur liegt und zudem ein hoher Wärmeeintrag aus der Brennstoffzelle in das Kühlmittel erfolgt. Dieses führt dazu, dass bei hoher Last die Kühlung nicht mehr ausreicht und die Leistung der Brennstoffzelle auf Grund der unzureichenden Kühlung beschränkt werden muss. Bei einem Einsatz der Brennstoffzelle in einem Kraftfahrzeug ist die Leistung daher bei hohen Umgebungstemperaturen, bei Bergfahrten und bei geringer Geschwindigkeit zu begrenzen. Alternativ ist der Kühler sehr groß zu dimensionieren.

Die DE 101 52 233 A1 offenbart ein Brennstoffzellensystem mit einem ersten Kühlkreislauf, in dem eine Brennstoffzelleneinheit angeordnet ist. Der erste Kühlkreislauf ist über eine Wärmepumpe an einen separaten zweiten Kühlkreislauf angekoppelt, in dem ein Luftkühler angeordnet sein kann. Die Wärmepumpe entzieht dem ersten Kühlkreislauf Wärme und führt sie dem zweiten Kühlkreislauf auf einem höheren Temperaturniveau zu, so dass der Kühler kleiner dimensioniert werden kann.

Nachteilig hierbei ist, dass die Wärmepumpe einen Kompressor benötigt, der elektrische Energie verbraucht, wodurch der Wirkungsgrad des Brennstoffzellensystems insgesamt verringert wird.

Die DE 102009014743 offenbart ein Brennstoffzellensystem mit einer Niedertemperatur-Brennstoffzelle. In den Gasströmen der Brennstoffzelle sind Flüssigkeitsabscheider angeordnet, wobei die Flüssigkeit aus den Abscheidern teilweise einer Seite eines Wärmetauschers zugeführt wird. Der Wärmetauscher ist auf seiner anderen Seite von der verdichteten Luft umströmt.

Die WO 2008 / 000001 offenbart ein Brennstoffzellensystem, das eine erste und eine zweite Zweigleitung einer kathodenseitigen Zuführleitung offenbart. Diese werden über einen regelbaren Wärmetauscher geführt, wobei der Wärmetauscher in einem Kühlmittelkreislauf der Niedertemperaturbrennstoffzelle eingebunden ist.

Die US 2009 / 0098425 offenbart ebenfalls ein Brennstoffzellensystem. Dieses System beinhaltet einen Kondensator, in dem Wasserdampf mit einem Kühlmedium abgekühlt wird und als flüssiges Wasser abgeschieden wird. Das flüssige Wasser wird anschließend dem Befeuchter des Brennstoffzellensystems wieder zugeführt.

### Offenbarung der Erfindung

Es ist daher die Aufgabe der Erfindung, ein Brennstoffzellensystem und ein Verfahren zum Kühlen eines Kühlmittels bei einem derartigen Brennstoffzellensystem bereitzustellen, bei dem die Kühlung des Kühlmittels verbessert wird, ohne dass der Wirkungsgrad des Brennstoffzellensystem wesentlich oder überhaupt nicht verschlechtert wird.

Zur Lösung der Aufgabe wird ein Brennstoffzellensystem mit den Merkmalen des Anspruches 1 vorgeschlagen. Vorteilhafte Weiterbildungen des Brennstoffzellensystems sind in den abhängigen Vorrichtungsansprüchen angegeben. Die Aufgabe wird weiterhin gelöst durch Verfahren mit den Merkmalen des unabhängigen Anspruchs 8. Vorteilhafte Weiterbildungen des Verfahrens sind in den abhängigen Verfahrensansprüchen angegeben. Merkmale und Details, die im Zusammenhang mit dem erfindungsgemäßen Verfahren beschrieben sind, gelten dabei selbstverständlich auch im Zusammenhang mit dem erfindungsgemäßen Brennstoffzellensystem und umgekehrt. Dabei können die in den Ansprüchen und in der Beschreibung erwähnten Merkmale jeweils einzeln für sich oder in Kombination erfindungswesentlich sein.

Erfindungsgemäß ist vorgesehen, dass in dem Austrittsstrom mindestens ein Abkühlelement angeordnet ist, durch das der Austrittsstrom abkühlbar ist, und in dem Austrittsstrom in Strömungsrichtung des Austrittsstroms hinter dem Abkühlelement eine Kühlvorrichtung angeordnet ist, in der das Kühlmittel durch den Austrittsstrom kühlbar ist.

Es kann ferner sein, dass das Kühlmittel nur in der Kühlvorrichtung abgekühlt wird. Bevorzugt wird die Kühlung des Kühlmittels in der Kühlvorrichtung neben einer weiteren, üblichen Kühlung des Kühlmittels, z. B. in einem Luftkühler, eingesetzt werden. Das Kühlmittel wird somit bevorzugt durch einen kühlen Austrittsstrom des Brennstoffzellensystems zusätzlich in einer Kühlvorrichtung gekühlt. Durch diese zusätzliche Kühlung wird die gesamte Kühlung des Kühlmittels verbessert. Für eine zusätzliche Führung des Austrittsstromes und des Kühlmittels durch die Kühlvorrichtung ist auch nur wenig zusätzliche Arbeit gegen den Strömungswiderstand der Kühlvorrichtung aufzuwenden, so dass der Wirkungsgrad des erfindungsgemäßen Brennstoffzellensystems nur geringfügig verschlechtert, die Kühlung des Kühlmittels hingegen verbessert wird.

Beispielhaft kann der Eintrittsstrom Sauerstoff enthaltene Luft sein, die einer Kathode der Brennstoffzelle als Oxidationsmittel zugeführt wird. In der Brennstoffzelle reagiert der Sauerstoff zumindest teilweise mit einem Brennstoff, z. B. Wasserstoff, der einer Anode der Brennstoffzelle zur Verfügung gestellt wird, zu Wasser, das die Luft befeuchtet. Der Austrittsstrom kann z.B. der sauerstoffärmere und feuchtere Austrittsstrom aus der Kathode sein. Zusätzlich oder alternativ kann der Austrittsstrom ein Austrittsstrom aus der Anode sein, in dem der nicht in der Brennstoffzelle umgesetzter Brennstoff, z.B. Wasserstoff, katalytisch nach Durchlaufen der Brennstoffzelle verbrannt worden ist.

Wesentlich für die Erfindung ist, dass in der Kühlvorrichtung der Austrittsstrom kühler als das Kühlmittel ist. Hierzu wird der Austrittsstrom vor der Kühlvorrichtung durch mindestens ein Abkühlelement gekühlt. Besonders vorteilhaft ist es, wenn das Abkühlelement bereits zu einem anderen Zwecke als der Abkühlung des Austrittsstromes in dem Brennstoffzellensystem angeordnet ist. Hierbei kann die Abkühlung des Austrittsstromes nur ein Nebeneffekt sein, den sich die Erfindung zu Nutze macht.

So kann es sein, dass das Abkühlelement einer Turbine entspricht. Durch die Turbine kann der Austrittsstrom mechanische Arbeit leisten oder elektrischen Strom erzeugen, wobei als erfindungsgemäß genutzter Nebeneffekt der Austrittsstrom expandiert und dabei abkühlt. Insbesondere kann es sein, dass die Turbine mit einem Kompressor auf einer gemeinsamen Welle gelagert ist, so dass die Turbine den Kompressor antreibt. Der Kompressor kann in dem Eintrittsstrom angeordnet sein, um den Eintrittsstrom zu komprimieren. Hierbei kann der Eintrittsstrom insbesondere der Eintrittsstrom zur Kathode sein.PA P Zusätzlich ist es denkbar, dass das Abkühlelement einer Befeuchtungsvorrichtung entspricht, in der der Austrittsstrom abgekühlt wird. Eine Befeuchtungsvorrichtung kann in dem Austrittsstrom und in dem Eintrittsstrom zu dem Zweck angeordnet sein, dass der Eintrittsstrom durch den Austrittsstrom befeuchtet wird. Hierbei sind der Eintrittsstrom und der Austrittsstrom durch eine wasserdurchlässige Membran in der Befeuchtungsvorrichtung voneinander getrennt, so dass nur Wasser und Wärme zwischen dem Eintrittsstrom und dem Austrittsstrom ausgetauscht werden können. Dadurch, dass in der Befeuchtungsvorrichtung Wasser im Austrittsstrom verdampft und danach dem Eintrittsstrom zugeführt wird, kühlt der Austrittsstrom in der Befeuchtungsvorrichtung als erfindungsgemäß genutzter Nebeneffekt gleichzeitig ab.

Auch ist es denkbar, dass die Temperatur des Eintrittsstroms durch eine Kompression so erhöht ist, dass in der Befeuchtungsvorrichtung der Eintrittsstrom den Austrittsstrom erwärmt. Auch kann zwischen dem Eintrittsstrom und dem Austrittsstrom ein zusätzliches Wärmetauschelement angeordnet sein, in dem der Eintrittsstrom den Austrittsstrom erwärmt. Wird ein durch die Befeuchtungsvorrichtung und/oder das Wärmetauschelement erwärmter Austrittsstrom durch eine Turbine geführt, so kann der so erwärmte Austrittsstrom in einem erhöhten Maße die Turbine, die in diesem Fall alleine als Abkühlelement wirkt, antreiben.

Die Erfindung kann insbesondere bei einem Fahrzeug oder Kraftfahrzeug, das ein Brennstoffzellensystem als Antrieb nutzt, eingesetzt werden. Ist es bei einem Kaltstart, z. B. im Winter, nicht erforderlich, dass das Kühlmittel die Brennstoffzelle kühlt, so kann vorgesehen sein, dass in dem Brennstoffzellensystem ein Auslassventil angeordnet ist, durch das der Austrittsstrom in die Umgebung entweicht, ohne vorher die Kühlvorrichtung zu durchlaufen. Hierdurch wird ein Wirkungsgradverlust des Brennstoffzellensystems, der ansonsten auf Grund des Strömungswiderstandes der Kühlvorrichtung eintreten würde, vermieden.

In einer bevorzugten Ausführungsform ist die Kühlvorrichtung ein Wärmetauscher, der zusätzlich zu einem Kühler in dem Kühlsystem angeordnet ist. In dem Kühler wird das Kühlmittel durch ein anderes Kühlmedium als den Austrittsstrom gekühlt. Z. B. kann in einem Kraftfahrzeug ein Kühler in Form eines Luftkühlers vorgesehen sein, der von Luft durchströmt wird, so dass in diesem Fall Luft dem Kühlmedium entspricht. Bei der Luft kann es sich um einen Fahrtwind und/oder um von einem Kühlerlüfter angesaugte Luft handeln. Die Kühlvorrichtung kann strömungstechnisch in Reihe zu dem Kühler angeordnet sein. Hierbei kann die Kühlvorrichtung in Strömungsrichtung des Kühlmittels vor oder hinter dem Kühler angeordnet sein. Die Anordnung kann von den Temperaturen des Austrittsstroms und des Kühlmediums, das den Kühler durchströmt, abhängig gemacht werden. Ist die Temperatur des Austrittsstroms in der Kühlvorrichtung üblicherweise geringer als die Temperatur des Kühlmediums, so ist die Kühlvorrichtung bevorzugt hinter dem Kühler angeordnet und umgekehrt. Die Kühlvorrichtung und der Kühler können alternativ auch auf strömungstechnisch parallelen Kühlmittelpfaden angeordnet sein. Die Kühlvorrichtung kann als Rohrbündelwärmetauscher ausgestaltet sein. Bevorzugt durchströmen das Kühlmittel und der Austrittsstrom die Kühlvorrichtung im Gegenstrom. Die strömungstechnische Führung von Kühlmittel und Austrittsstrom im Kreuz- oder Gleichstrom ist aber ebenfalls denkbar.

Alternativ kann die Kühlvorrichtung dem Kühler, insbesondere dem Luftkühler, entsprechen. Das heißt, dass der Austrittsstrom zusätzlich zu dem Kühlmedium, das den Kühler durchströmt, durch den Kühler geleitet wird. Hierbei können sich insbesondere das Kühlmedium und der Austrittsstrom durchmischen. Bevorzugt strömen das Kühlmedium und der Austrittsstrom in dieselbe Richtung. Um bei einem Kraftfahrzeug den Austrittsstrom in dieselbe Richtung wie den Fahrtwind zu leiten, ist der Luftkühler in dem Kraftfahrzeug etwas nach hinten zu versetzen. Alternativ können das Kühlmedium und der Austrittsstrom auch in entgegengesetzte oder zueinander senkrechte Richtungen strömen. Die strömungstechnische Führung des Kühlmittels kann hierbei zu dem Kühlmedium und/oder dem Austrittsstrom jeweils im Gleichstrom, im Gegenstrom oder im Kreuzstrom erfolgen, wobei jede Kombination denkbar ist. Bevorzugt strömen das Kühlmedium und der Austrittsstrom in dieselbe Richtung und im Kreuzstrom zu dem Kühlmittel.

Denkbar ist alternativ ebenfalls, dass das Kühlmedium, insbesondere die Luft, und der Austrittsstrom denselben Kühler durchströmen, um das Kühlmittel abzukühlen, jedoch stofflich getrennt voneinander sind. Hierdurch sind insbesondere unterschiedliche Strömungsrichtungen des Kühlmediums und des Austrittsstroms ohne Verwirbelungen realisierbar. So kann z. B. zumindest ein Teil des Kühlers als Rohrbündelwärmetauscher ausgebildet ist, dessen Mantel von zumindest eines Teils des Kühlmittels durchströmt wird, während der Austrittsstrom den Rohrbündelwärmetauscher im Gegenstrom durchströmt und das Kühlmedium, von dem Austrittsstrom stofflich getrennt, im Kreuzstrom auf den Kühler trifft.

Dadurch, dass der Austrittsstrom das Kühlmittel kühlt, kann ein Kühler im Vergleich zum Stand der Technik kleiner dimensioniert werden.

Die Aufgabe wird erfindungsgemäß auch durch ein Verfahren zum Kühlen eines Kühlmittels, das in einem Kühlsystem des Brennstoffzellensystems zirkuliert, gelöst. In dem Brennstoffzellensystem führt gleichzeitig ein Eintrittsstrom einer Brennstoffzelle ein Edukt, d. h. ein Oxdiationsmittel oder einen Brennstoff, zu und ein Austrittsstrom führt ein Produkt, z. B. Wasser aus der Kathode und/oder Anode ab. Hierbei ist vorgesehen, dass der Austrittsstrom zunächst durch ein Abkühlelement abgekühlt wird und danach der Austrittsstrom in einer Kühlvorrichtung das Kühlmittel abkühlt.

Wird der Austrittsstrom als zusätzliche Kühlung für das Kühlmittel verwendet, so ist hierbei besonders vorteilhaft, dass der Austrittsstrom sehr feucht sein kann. Wasser des Austrittsstroms, was in der Kühlvorrichtung verdampft, entzieht dem Kühlmittel durch seine Verdampfungsenthalpie Wärme, wodurch die Kühlung des Kühlmittels weiter verbessert wird. Hierzu trägt auch die besonders hohe Verdampfungsenthalpie des Wassers bei.

Bei der Brennstoffzelle kann es sich um eine Polymer-Elektrolyt-Membran-(PEM)-Brennstoffzelle handeln, bei der reiner Wasserstoff zur Anode und Sauerstoff enthaltene Luft zur Kathode zugeführt wird. Anstelle einer einzelnen Brennstoffzelle kann auch ein Stapel aus Brennstoffzellen verwendet werden. Neben dem Kühlsystem, das die Brennstoffzelle kühlt, kann ein weiterer Kühlkreislauf zum Kühlen der Leistungselektronik in dem Brennstoffzellensystem vorhanden sein.

Bei dem Luftkühler kann es sich um einen Fahrzeugkühler, insbesondere Autokühler, handeln, der als Radiator ausgebildet sein kann.

Weitere, die Erfindung verbessernde Maßnahmen ergeben sich aus der nachfolgenden Beschreibung zu den Ausführungsbeispielen der Erfindung, welche in den Figuren schematisch dargestellt ist. Sämtliche aus den Ansprüchen, der Beschreibung oder der Zeichnung hervorgehende Merkmale und/oder Vorteile, einschließlich konstruktiver Einzelheiten, räumlicher Anordnung und Verfahrensschritte, können sowohl für sich als auch in den verschiedensten Kombinationen erfindungswesentlich sein. Es zeigen:
- Fig. 1: ein erstes, schematisch dargestelltes Ausführungsbeispiel eines erfindungsgemäßen Brennstoffzellensystems,
- Fig. 2: ein zweites, schematisch dargestelltes Ausführungsbeispiel eines erfindungsgemäßen Brennstoffzellensystems und
- Fig. 3: ein drittes, schematisch dargestelltes Ausführungsbeispiel eines erfindungsgemäßen Brennstoffzellensystems.

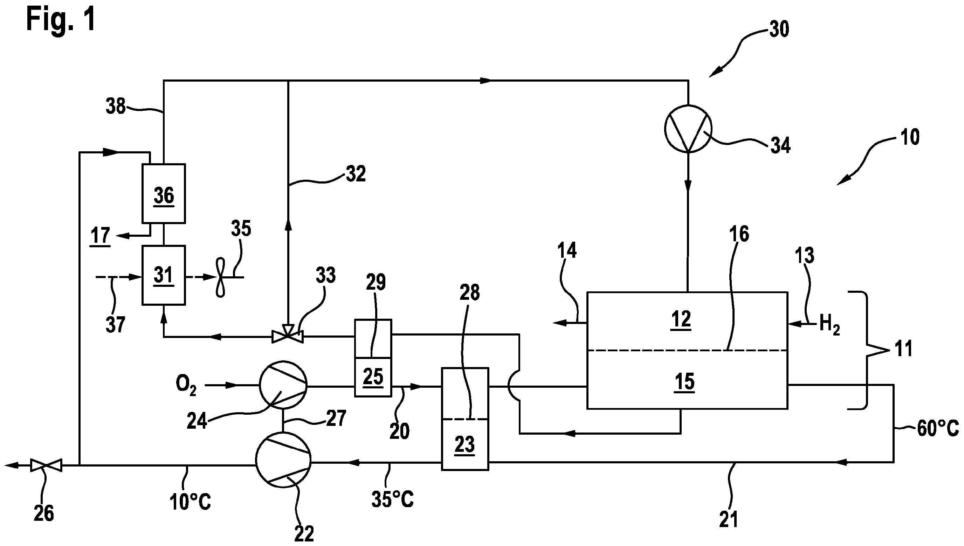

Elemente mit gleicher Funktion und Wirkungsweise sind in den Figuren 1 bis 3 mit denselben Bezugszeichen versehen. Pfeile in den Figuren stellen jeweils die Strömungsrichtung des jeweiligen Fluids dar.

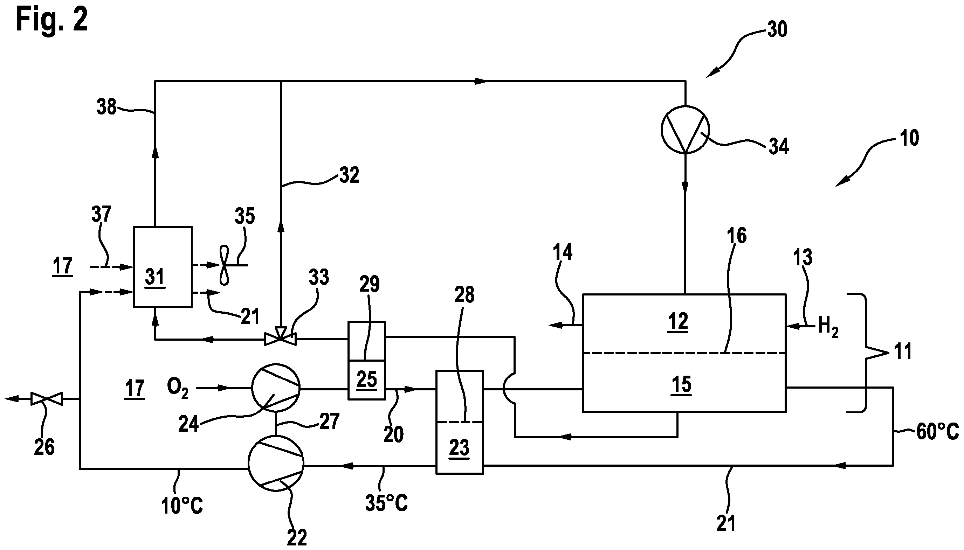

In den Figuren 1 und 2 ist jeweils ein Brennstoffzellensystem 10 beispielhaft mit einer Brennstoffzelle 11 dargestellt. Das Brennstoffzellensystem 10 ist in einem nicht dargestellten Kraftfahrzeug angeordnet. Die Brennstoffzelle 11 weist eine Anode 12 und eine Kathode 15 auf, die durch eine Polymer-Elektrolyt-Membran 16 voneinander getrennt sind. Der Anode 12 wird Wasserstoff als Brennstoff in einem ersten Eintrittsstrom, im Folgenden als Anodeneintrittsstrom 13 bezeichnet, zugeführt. Der Wasserstoff wird in der Brennstoffzelle 11 elektrochemisch mit Sauerstoff der Kathode 15 zu Wasser umgesetzt. Nicht umgesetzter Wasserstoff, Inertgase und Wasser verlassen als ein erster Austrittsstrom, im Folgenden als Anodenaustrittsstrom 14 bezeichnet, die Anode 12.

Um der Kathode 15 Sauerstoff zuzuführen, wird Luft aus der Umgebung 17 in einem zweiten Eintrittsstrom, im Folgenden als Kathodeneintrittsstrom 20 bezeichnet, durch einen Kompressor 24 komprimiert. Es kann noch ein weiterer, nicht dargestellter, durch einen elektrischen Motor betriebener Kompressor zum Komprimieren des Kathodeneintrittsstroms 20 in dem Kathodeneintrittsstrom 20 angeordnet sein. Der durch das Komprimieren erwärmte Kathodeneintrittsstrom 20 wird in einer Wärmetauschvorrichtung 25 im Wesentlichen auf das Temperaturniveau der Brennstoffzelle 11, das 60°C bis 80°C betragen kann, abgekühlt. Hierbei wird die Wärme des Kathodeneintrittsstroms 20 von einem Kühlmittel eines Kühlsystems 30 aufgenommen, das die Wärmetauschvorrichtung stofflich durch eine Wand 29 vom Kathodeneintrittsstrom 20 getrennt im Gegenstrom durchströmt. Danach durchströmt der Kathodeneintrittsstrom 20 eine Befeuchtungsvorrichtung 23, die als Gas-Gas-Befeuchter ausgebildet ist und in der der Kathodeneintrittsstrom 20 Wasser aufnimmt. Anschließend wird Sauerstoff des Kathodeneintrittsstromes 20 an der Kathode 15 zu Wasser umgesetzt. Nicht umgesetzter Sauerstoff, Inertgase und Wasser verlassen die Kathode 15 als ein zweiter Austrittsstrom, der im Folgenden als Kathodenaustrittsstrom 21 bezeichnet wird.

Der Kathodenaustrittsstrom 21, der zunächst das Temperaturniveau der Brennstoffzelle 11 innehat, durchströmt die Befeuchtungsvorrichtung 23, um Wasser an den Kathodeneintrittsstrom 20 abzugeben. Hierzu weist die Befeuchtungsvorrichtung 23 eine wasserdurchlässige Membran 28 auf. Hierbei verdampft Wasser des Kathodenaustrittsstromes 21, wodurch die Temperatur des Kathodenaustrittsstromes 21 sinkt, beispielsweise auf 35°C. Die Befeuchtungsvorrichtung 23 wirkt somit als ein erstes Abkühlelement. Anschließend durchströmt der Kathodenaustrittsstrom 21 eine Turbine 22. Die Turbine 22 ist auf einer gemeinsamen Welle 27 mit dem Kompressor 24 gelagert, so dass der Kathodenaustrittsstrom 21 den Kathodeneintrittsstrom 20 komprimiert. Hierbei kühlt der Kathodenaustrittsstrom 21 erneut, beispielsweise auf 10-15 °C, ab. Die Turbine 22 wirkt daher als ein zweites Abkühlelement.

Um den Kathodeneintrittsstrom 20 in der Wärmetauschvorrichtung 25 abzukühlen, aber auch um die Brennstoffzelle 11 selber auf dem gewünschten Temperaturniveau zu halten, durchströmt das Kühlmittel des Kühlsystems 30 die Brennstoffzelle 11 und die Wärmetauschvorrichtung 25. Hierbei wird die Zirkulation des Kühlmittels im Kühlsystem 30 durch eine Pumpe 34 verursacht. Nachdem das Kühlmittel sich in der Brennstoffszelle 11 und Wärmetauschvorrichtung 25 erwärmt hat, wird das Kühlmittel in einem Luftkühler 31, der in der Motorhaube des Kraftfahrzeuges angeordnet ist, gekühlt. Hierzu durchströmt Luft 37 aus der Umgebung 17 den Luftkühler im Kreuzstrom. Hierbei kann es sich um den reinen Fahrtwind handeln oder zusätzlich oder alternativ Luft 37 durch einen Kühlerlüfter 35 angesaugt werden. Ist, z. B. bei einem Kaltstart, die Kühlung des Kühlmittels unerwünscht, so kann zumindest ein Teil des Kühlmittels nicht durch einen Strömungspfad 38 mit dem Luftkühler 31, sondern durch einen Bypass 32 des Kühlsystems 30 geführt werden. Ob und zu welchem Anteil das Kühlmittel durch den Bypass 32 strömt, wird durch ein 3/2 Wegeventil 33 eingestellt.

Liegt ein Kaltstart vor, so kann der Kathodenaustrittsstrom 21 das Brennstoffzellensystem 10 durch ein Auslassventil 26 verlassen. Das 3/2 Wegeventil 33 und das Auslassventil 26 werden durch eine nicht dargestellte Steuereinrichtung angesteuert. Hierbei kann der Steuereinrichtung die Temperatur des Kühlmittels und/oder der Umgebung durch nicht dargestellte Temperatursensoren übermittelt werden. Ebenfalls kann die elektrische Leistung der Pumpe 34 durch die Steuereinrichtung in Abhängigkeit von den übermittelten Temperaturen verändert werden.

Die Fluide, wie der Kathodeneintritts- und austrittsstrom 20, 21, der Anodeneintritts- und austrittsstrom 13, 14 und das Kühlmittel sind, soweit sie in Schläuchen oder Rohren geführt sind, mit durchgezogenen Linien dargestellt. Strömungen in der Umgebung 17, wie die Strömung der Luft 37 durch den Luftkühler 31, sind mit gestrichelten Linien dargestellt.

Abgesehen von einem Kaltstart muss das Kühlmittel in der Regel gekühlt werden. Hierzu wird der durch die Turbine 22 und die Befeuchtungsvorrichtung 23 abgekühlte Kathodenaustrittsstrom 21, der in einer Kühlvorrichtung 31, 36 das Kühlmittel kühlt, verwendet. Dadurch kann der Luftkühler 31 kleiner als im Stand der Technik dimensioniert werden und/oder dennoch auch bei Bergfahrten, bei geringer Geschwindigkeit des Kraftfahrzeuges und/oder hoher Umgebungstemperatur die Kühlung des Kühlmittels ausreichend sein.

In Fig. 1 wird das Kühlmittel durch den Kathodenaustrittsstrom 21 in einem Wärmetauscher 36 als Kühlvorrichtung 31, 36 gekühlt, der in Strömungsrichtung des Kühlmittels hinter dem Luftkühler 31 in dem Strömungspfad 38 angeordnet ist. Der Wärmtauscher 36 ist als Gas-Wasser-Wärmetauscher, insbesondere als Rohrbündelwärmetauscher ausgebildet, der von dem Kühlmittel und dem Kathodenaustrittsstrom 21 im Gegenstrom durchströmt wird. Danach wird der Kathodenaustrittsstrom 21 aus dem Brennstoffzellensystem 10 an die Umgebung 17 abgegeben. Alternativ kann der Wärmetauscher 36 in einem parallelen, nicht dargestellten Strömungspfad zwischen dem Strömungspfad 38 und dem Bypass 32 angeordnet sein.

In Fig. 2 dient als Kühlvorrichtung 31, 36 der Luftkühler 31 selber. Ein separater Wärmetauscher 36 entfällt. Der Kathodenaustrittsstrom 21 verlässt hierbei vor dem Luftkühler 31 den Schlauch oder das Rohr, um in der Umgebung 17 mit der Luft 37 vermischt den Luftkühler 31 zu durchströmen und dabei das Kühlmittel zu kühlen. Die Strömungsrichtung des Kathodenaustrittsstromes 21 nach Verlassen des Schlauches bzw. Rohres ist hierbei mit gestrichelten Linien dargestellt. Um eine derartige Führung des Kathodenaustrittsstromes 21 zu ermöglichen, befindet sich der Luftkühler 31 ein wenig von einem Kühlergrill zurückgesetzt in einer Motorhaube des Kraftfahrzeuges.

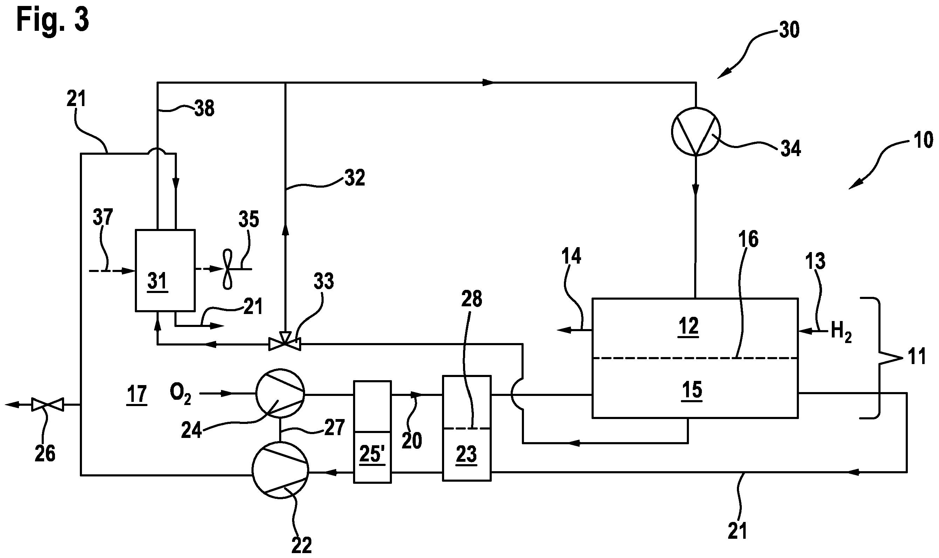

In Fig. 3 ist ein drittes Ausführungsbeispiel eines erfindungsgemäßen Brennstoffzellensystems 10 dargestellt. Hierbei soll im Folgenden nur auf die Unterschiede zu den Figuren 1 und 2 eingegangen werden.

Im Gegensatz zu Fig. 1 und 2 ist in dem Brennstoffzellensystem der Fig. 3 keine Wärmetauschvorrichtung 25 zwischen dem Kathodeneintrittsstrom 20 und dem Kühlmittel angeordnet. Vielmehr wird in einem Wärmetauschelement 25', das von dem Kathodeneintrittsstrom 20 und dem Kathodenaustrittsstrom 21 durchströmt wird, Wärme des komprimierten Kathodeneintrittsstromes 20 an den Kathodenaustrittsstrom 21 übertragen, so dass der Kathodenaustrittsstrom 21 vor dem Eintritt in die Turbine 22 erwärmt ist. Hierdurch kann die Leistung der Turbine 22 gesteigert werden. Die Abkühlung des Kathodeneintrittsstromes 21 erfolgt im Wärmeaustauschelement 25' nur teilweise. Weiterhin wird Wärme in der Befeuchtungsvorrichtung 23 von dem Kathodeneintrittsstrom 20 auf den Kathodenaustrittsstrom 21 übertragen, wodurch die Leistung der Turbine weiter gesteigert werden kann. In diesem Ausführungsbeispiel wirkt die Befeuchtungsvorrichtung 23 somit nicht als Abkühlelement. Einziges Abkühlelement in Fig. 3 ist die Turbine 22.

Als Kühlvorrichtung dient in Fig. 3 der Luftkühler 31. Im Gegensatz zu Fig. 2 sind die Luft 37 und der Kathodenaustrittsstrom 21 stofflich getrennt geführt. Der Kathodenaustrittsstrom 21 durchströmt den Luftkühler 31 in geschlossenen Rohren, so dass der Kathodenaustrittsstrom 21 sowohl von der Luft 37 als auch von dem Kühlmittel räumlich getrennt ist. Hierbei strömen bevorzugt das Kühlmittel und der Kathodenaustrittsstrom 21 im Gegenstrom. Die Luft 37 strömt als Fahrtwind und/oder von dem Kühlerlüfter 35 angesaugt im Kreuzstrom zu dem Kühlmittel und dem Kathodenaustrittsstrom 21.

Andere Kombinationsmöglichkeiten sind denkbar. So kann in Fig. 1 und 2 die Wärmetauschvorrichtung 25 durch ein Wärmetauschelement 25', wie in Fig. 3 dargestellt, ersetzt werden. Auch kann anstelle des Wärmetauschelementes 25' eine Wärmetauschvorrichtung 25 in dem Brennstoffzellensystem 10 der Fig. 3 angeordnet sein.

## Patentansprüche

1. Brennstoffzellensystem (10), insbesondere für ein Kraftfahrzeug,
mit mindestens einer Brennstoffzelle (11),
mit einem Kühlsystem (30) zum Kühlen der Brennstoffzelle (11),
wobei in dem Kühlsystem (30) ein Kühlmittel zirkulierbar ist,
mit einem Eintrittsstrom (13, 20), durch den ein Edukt der Brennstoffzelle (11) zuführbar ist,
und mit einem Austrittsstrom (14, 21), durch den ein Produkt aus der Brennstoffzelle (11) abführbar ist, wobei in dem Austrittsstrom (14, 21) mindestens ein Abkühlelement (22, 23) angeordnet ist, durch das der Austrittsstrom (14, 21) abkühlbar ist, und in dem Austrittsstrom (14, 21) in Strömungsrichtung hinter dem Abkühlelement (22, 23) eine Kühlvorrichtung (31, 36) angeordnet ist, in der das Kühlmittel durch den Austrittsstrom (14, 21) kühlbar ist.
**dadurch gekennzeichnet,**
**dass** das Abkühlelement (22, 23) eine Turbine (22) ist, durch die insbesondere ein Kompressor (24) des Eintrittsstroms (13, 20) antreibbar ist.

2. Brennstoffzellensystem (10) nach Anspruch 1, **dadurch gekennzeichnet, dass** mindestens eine Befeuchtungsvorrichtung (23) in dem Austrittsstrom (14, 21) und zugleich im Eintrittsstrom (13, 20) angeordnet ist, wobei insbesondere der Austrittsstrom (14, 21) durch die Befeuchtungsvorrichtung (23) abkühlbar ist und somit als Abkühlelement (22, 23) wirkt.

3. Brennstoffzellensystem (10) nach Anspruch 1 oder 2, **dadurch gekennzeichnet, dass** der Austrittsstrom (14, 21) durch ein Auslassventil (26) in Strömungsrichtung vor der Kühlvorrichtung (31, 36) aus dem Brennstoffzellensystem (10) entweichbar ist.

4. Brennstoffzellensystem (10) nach einem der vorhergehenden Ansprüche, **dadurch gekennzeichnet, dass** die Kühlvorrichtung (31, 36) ein Wärmetauscher (36) ist, der zusätzlich zu einem Kühler, insbesondere einem Luftkühler (31), einem Autokühler und/oder einem Radiator, in dem Kühlsystem (30) angeordnet ist.

5. Brennstoffzellensystem (10) nach einem der Ansprüche 1 bis 4, **dadurch gekennzeichnet, dass** die Kühlvorrichtung (31, 36) dem Kühler, insbesondere dem Luftkühler (31), dem Autokühler und/oder dem Radiator, entspricht.

6. Brennstoffzellensystem (10) nach einem der vorhergehenden Ansprüche, **dadurch gekennzeichnet, dass** der Austrittsstrom (14, 21) und das Kühlmittel im Gegenstrom oder im Kreuzstrom durch die Kühlvorrichtung (31, 36) führbar sind.

7. Verfahren zum Kühlen eines Kühlmittels eines Brennstoffzellensystems (10), wobei das Kühlmittel in einem Kühlsystem (30) des Brennstoffzellensystems (10) zirkuliert,
wobei ein Eintrittsstrom (13, 20) einer Brennstoffzelle (11) des Brennstoffzellensystems (10) ein Edukt zuführt und ein Austrittsstrom (14, 21) ein Produkt aus der Brennstoffzelle (11) abführt,
wobei der Kathodenaustrittsstrom (21) zunächst durch ein erstes Abkühlelement (23) abgekühlt wird und danach der Kathodenaustrittsstrom (21) in einer Kühlvorrichtung (31, 36) das Kühlmittel abkühlt
**dadurch gekennzeichnet,**
**dass** der Kathodenaustrittsstrom (21) anschließend an das erste Abkühlelement (23) durch ein zweites Abkühlelement (22) abgekühlt wird, wobei das zweite Abkühlelement (22) eine Turbine (22) ist, durch die insbesondere ein Kompressor (24) des Eintrittsstroms (20) angetrieben wird.

8. Verfahren nach Anspruch 7, **dadurch gekennzeichnet, dass** Wasser in dem Austrittsstrom (14, 21) in der Kühlvorrichtung (31, 36) verdampft und damit dem Kühlmittel Wärme entzieht.

9. Verfahren nach Anspruch7 oder 8, **dadurch gekennzeichnet, dass** es mit einem Brennstoffzellensystem (10) der Ansprüche 1 bis 6 durchführbar ist.

## Claims

1. Fuel cell system (10), in particular for a motor vehicle,
having at least one fuel cell (11),
having a cooling system (30) for cooling the fuel cell (11), wherein a cooling medium is able to be circulated in the cooling system (30),
having an inlet stream (13, 20) by which a starting material is able to be fed to the fuel cell (11),
and having an outlet stream (14, 21) by which a product is able to be discharged from the fuel cell (11), wherein, in the outlet stream (14, 21), there is arranged at least one cooling element (22, 23) by which the outlet stream (14, 21) is able to be cooled and, in the outlet stream (14, 21), there is arranged downstream of the cooling element (22, 23) in the flow direction a cooling device (31, 36) in which the cooling medium is able to be cooled by the outlet stream (14, 21),
**characterized**
**in that** the cooling element (22, 23) is a turbine (22) by which, in particular, a compressor (24) of the inlet stream (13, 20) is able to be driven.

2. Fuel cell system (10) according to Claim 1, **characterized in that** at least one humidification device (23) is arranged in the outlet stream (14, 21) and at the same time in the inlet stream (13, 20), wherein in particular the outlet stream (14, 21) is able to be cooled by the humidification device (23), and thus acts as a cooling element (22, 23).

3. Fuel cell system (10) according to Claim 1 or 2, **characterized in that** the outlet stream (14, 21) is able to escape from the fuel cell system (10) through an outlet valve (26) upstream of the cooling device (31, 36) in the flow direction.

4. Fuel cell system (10) according to one of the preceding claims, **characterized in that** the cooling device (31, 36) is a heat exchanger (36) which is arranged in the cooling system (30) in addition to a cooler, in particular an air cooler (31), an automotive cooler and/or a radiator.

5. Fuel cell system (10) according to one of Claims 1 to 4, **characterized in that** the cooling device (31, 36) corresponds to the cooler, in particular the air cooler (31), the automotive cooler and/or the radiator.

6. Fuel cell system (10) according to one of the preceding claims, **characterized in that** the outlet stream (14, 21) and the cooling medium are able to be conducted through the cooling device (31, 36) in a counterflow configuration or in a crossflow configuration.

7. Method for cooling a cooling medium of a fuel cell system (10),
wherein the cooling medium circulates in a cooling system (30) of the fuel cell system (10),
wherein an inlet stream (13, 20) feeds a starting material to a fuel cell (11) of the fuel cell system (10) and an outlet stream (14, 21) discharges a product from the fuel cell (11), wherein the cathode outlet stream (21) is firstly cooled by a first cooling element (23) and afterwards the cathode outlet stream (21) cools the cooling medium in a cooling device (31, 36), **characterized**
**in that** the cathode outlet stream (21) is cooled by a second cooling element (22) following the first cooling element (23),
wherein the second cooling element (22) is a turbine (22) by which, in particular, a compressor (24) of the inlet stream (20) is driven.

8. Method according to Claim 7, **characterized in that** water in the outlet stream (14, 21) evaporates in the cooling device (31, 36) and thus extracts heat from the cooling medium.

9. Method according to Claim 7 or 8, **characterized in that** said method is able to be carried out with a fuel cell system (10) of Claims 1 to 6.

## Revendications

1. Système (10) de cellule à combustible, en particulier pour véhicule automobile, et comportant
au moins une cellule à combustible (11),
un système de refroidissement (30) qui refroidit la cellule à combustible (11), un fluide de refroidissement pouvant être mis en circulation dans le système de refroidissement (30),
un écoulement d'entrée (13, 20) par lequel un réactif peut être amené à la cellule à combustible (11) et
un écoulement de sortie (14, 21) par lequel un produit peut être évacué de la cellule à combustible (11),
au moins un élément de refroidissement (22, 23) par lequel l'écoulement de sortie (14, 21) peut être refroidi étant disposé dans l'écoulement de sortie (14, 21) et un ensemble de refroidissement (31, 36) dans lequel le fluide de refroidissement peut être refroidi par l'écoulement de sortie (14, 21) étant disposé dans l'écoulement de sortie (14, 21) en aval de l'élément de refroidissement (22, 23) dans la direction d'écoulement,
**caractérisé en ce que**
l'élément de refroidissement (22, 23) est une turbine (22) par laquelle en particulier un compresseur (24) de l'écoulement d'entrée (13, 20) peut être entraîné.

2. Système (10) de cellule à combustible selon la revendication 1, **caractérisé en ce qu'**au moins un ensemble d'humidification (23) est disposé dans l'écoulement de sortie (14, 21) et également dans l'écoulement d'entrée (13, 20), l'écoulement de sortie (14, 21) pouvant être refroidi par l'ensemble d'humidification (23) et agissant ainsi comme élément de refroidissement (22, 23).

3. Système (10) de cellule à combustible selon les revendications 1 ou 2, **caractérisé en ce que** l'écoulement de sortie (14, 21) peut s'échapper hors du système (10) de cellule à combustible par une soupape d'échappement (26) disposée en avant de l'ensemble de refroidissement (31, 36) dans la direction d'écoulement.

4. Système (10) de cellule à combustible selon l'une des revendications précédentes, **caractérisé en ce que** l'ensemble de refroidissement (31, 36) est un échangeur de chaleur (36) qui est disposé dans le système de refroidissement (30) en plus d'un refroidisseur, en particulier d'un refroidisseur d'air (31), d'un auto-refroidisseur et/ou d'un radiateur.

5. Système (10) de cellule à combustible selon l'une des revendications 1 à 4, **caractérisé en ce que** l'ensemble de refroidissement (31, 36) correspond au refroidisseur, en particulier au refroidisseur d'air (31), à l'auto-refroidisseur et/ou au radiateur.

6. Système (10) de cellule à combustible selon l'une des revendications précédentes, **caractérisé en ce que** l'écoulement de sortie (14, 21) et le fluide de refroidissement peuvent être amenés à contre-courant ou à courant croisé dans l'ensemble de refroidissement (31, 36).

7. Procédé de refroidissement d'un fluide de refroidissement d'un système (10) de cellule à combustible, le fluide de refroidissement circulant dans un système de refroidissement (30) du système (10) de cellule à combustible,
un écoulement d'entrée (13, 20) apportant un réactif à une cellule à combustible (11) du système (10) de cellule à combustible et un écoulement de sortie (14, 21) évacuant un produit de la cellule à combustible (11),
l'écoulement de sortie de cathode (21) étant d'abord refroidi par un premier élément de refroidissement (23) et l'écoulement de sortie de cathode (21) refroidissant ensuite le fluide de refroidissement dans un ensemble de refroidissement (31, 36),
**caractérisé en ce que**
l'écoulement de sortie de cathode (21) est ensuite refroidi par un deuxième élément de refroidissement (22) après le premier élément de refroidissement (23), le deuxième élément de refroidissement (22) étant une turbine (22) par laquelle en particulier un compresseur (24) de l'écoulement d'entrée (20) est entraîné.

8. Procédé selon la revendication 7, **caractérisé en ce que** l'eau présente dans l'écoulement de sortie (14, 21) s'évapore dans l'ensemble de refroidissement (31, 36) et extrait ainsi de la chaleur du fluide de refroidissement.

9. Procédé selon les revendications 7 ou 8, **caractérisé en ce qu'**il peut être mis en oeuvre avec un système (10) de cellule à combustible selon les revendications 1 à 6.
